# EUROPÄISCHE PATENTSCHRIFT

(11) **EP 1 867 535 B1**
(45) Veröffentlichungstag und Bekanntmachung des Hinweises auf die Patenterteilung: **19.07.2017**
(21) Anmeldenummer: 07011521.7
(22) Anmeldetag: 13.06.2007
(51) Int. Cl.: B60R 25/00, B60R 25/02, E05B 49/00

(54) **Schliesssystem, insbesondere für ein Kraftfahrzeug**
Locking system, in particular for a motor vehicle
Système de fermeture, en particulier pour un véhicule automobile

(30) Priorität: 16.06.2006 DE 102006027727
(43) Veröffentlichungstag der Anmeldung: 19.12.2007
(73) Patentinhaber: Marquardt GmbH, 78604 Rietheim-Weilheim (DE)
(72) Erfinder: Obergfell, Robert, 78609 Tuningen (DE)
(74) Vertreter: Otten, Roth, Dobler & Partner mbB Patentanwälte

(56) Entgegenhaltungen:
- EP-A1- 0 566 970
- EP-A1- 0 566 970
- EP-A1- 1 504 972
- WO-A1-00/15931
- WO-A1-00/15931
- DE-A1- 3 820 248
- DE-A1- 3 820 248
- DE-A1- 19 518 410
- DE-A1- 19 800 638
- DE-A1- 19 845 649
- DE-A1-102005 017 458
- DE-B3- 10 325 246
- US-A- 4 688 036
- US-A- 4 688 036

## Beschreibung

Die Erfindung betrifft ein Schließsystem nach dem Oberbegriff des Patentanspruchs 1.

Bei erhöhten Sicherheitsanforderungen werden elektronische Schließsysteme verwendet, die beispielsweise mittels elektromagnetischer Wellen arbeiten. Insbesondere bei Kraftfahrzeugen werden solche Schließsysteme als Türschließsysteme für die Zugangsberechtigung und/oder als Zündschloss-Systeme, Lenkradverriegelungen, Wegfahrsperren o. dgl. für die Fahrberechtigung verwendet.

Derartige Schließsysteme sind aus der DE 43 40 260 A1 bekannt. Das Schließsystem besteht aus einer wenigstens zwei Zustände besitzenden, als Steuereinrichtung zur Ent- und/oder Verriegelung der Autotüren, des Zündschlosses o. dgl. ausgebildeten ersten Einrichtung und einer zugehörigen, in der Art eines elektronischen Schlüssels ausgebildeten zweiten Einrichtung. Die beiden Einrichtungen besitzen zu deren bestimmungsgemäßen Betrieb Sender und/oder Empfänger für Signale, die insbesondere mittels einer elektromagnetischen Trägerwelle übertragen werden. Insbesondere ist im bestimmungsgemäßen Betrieb zwischen dem Schlüssel und der Steuereinrichtung wenigstens ein Signal als codiertes Betriebssignal zur Authentikation des Schlüssels übertragbar, so daß nach positiver Auswertung des übertragenen Betriebssignals und damit bei berechtigtem Schlüssel eine Änderung des Zustandes der Steuereinrichtung bewirkbar ist.

Solche Schließsysteme sind auch mit so genannten "Keyless"-Funktionalitäten weiterentwickelt, wie aus der DE 10 2005 017 458 A1 oder der EP 1 504 972 A1 bekannt ist. So ist bei der "KeylessEntry"-Funktionalität eine manuelle Betätigung des elektronischen Schlüssels durch den Benutzer nicht mehr notwendig. Es genügt, daß der Benutzer den Schlüssel mit sich führt. Das Betriebssignal wird dann für die Zugangsberechtigung zwischen den beiden Einrichtungen selbsttätig übertragen, wenn der Benutzer sich in einem, in der Nähe des Kraftfahrzeugs befindlichen Wirkbereich aufhält und dort beispielsweise den Türgriff an der Autotüre betätigt. Ebenso können diese Schließsysteme eine "KeylessGo"-Funktionalität aufweisen, wobei das Betriebssignal für die Fahrberechtigung zwischen den beiden Einrichtungen selbsttätig übertragen wird, wenn der Benutzer sich innerhalb des Kraftfahrzeugs befindet und beispielsweise eine Start/Stop-Taste im Armaturenbrett betätigt. Für die Keyless-Funktionalitäten können die beiden Einrichtungen zu deren bestimmungsgemäßen Betrieb Sender und/oder Empfänger in der Art von Transpondern für niederfrequente elektromagnetische Signale besitzen, wobei Transponderspulen und/oder Antennen mit der ersten Einrichtung für deren bestimmungsgemäßen Betrieb in Verbindung stehen. Dadurch ist der bestimmungsgemäße Betrieb der beiden Einrichtungen ermöglicht, wenn die zweite Einrichtung in etwa in der Position und/oder in der Nähe der Position befindlich ist, in der die jeweilige, vom Schließsystem bewirkbare Funktion des Kraftfahrzeugs durch den Benutzer bedienbar ist.

In der gattungsbildenden Druckschrift DE 38 20 248 A1 wird beispielsweise ein schlüsselloses Betätigungssystem für eine Fahrzeugverriegelungsvorrichtung beschrieben, das eine sogenannte KeylessEntry-Funktion ermöglicht.

In der Druckschrift EP 0566970 A1 werden Antennen für Telefon, Funk oder Telefaxeinrichtungen zur Rundumsicherung des Fahrzeugs gegen Einbruch und Diebstahl, zur Funkaktivierung, beispielsweise einer Fahrzeugheizung oder eines Garagentors, aber auch für schlüssellose Zugangssysteme zur Betätigung von Tür oder Kofferraumverriegelung vorgeschlagen, wobei als Antennenträger am Fahrzeug serienmäßig vorhandene Dichtungsteile Verwendung finden sollen.

Die Druckschrift US4688036 beschreibt ein Schließsystem für Kraftfahrzeug, das insbesondere eine sogenannte KeylessGo-Funktion realisiert.

Ein KeylessGo- oder auch PassivGo-System heute bekannter Bauweise verfügt im Allgemeinen über zwei Möglichkeiten zur Feststellung der Fahrberechtigung. Zum einen kann für die zweite Einrichtung das Wecken und Abgrenzen entsprechend einer Positionsbestimmung der zweiten Einrichtung über niederfrequenete (LF-)Felder und die Kommunikation über hochfrequente (HF-)Felder oder auch aus einer Kombination von HF- sowie LF-Feldern erfolgen. Zum anderen kann eine so genannte "Notfahrfunktion" über LF-Felder oder auch Infrarat(IR)-Felder im Zündschloss erfolgen, um bei leerer Schlüsselbatterie noch mit dem Kraftfahrzeug fahren zu können. Es handelt sich somit um zwei unabhängig voneinander arbeitende Transpondersysteme, wodurch das Schließsystem aufwendig und teuer ist.

Der Erfindung liegt die Aufgabe zugrunde, das mit "Keyless"-Funktionalität ausgestattete Schließsystem einfacher und/oder kostengünstiger auszugestalten.

Diese Aufgabe wird bei einem gattungsgemäßen Schließsystem durch die kennzeichnenden Merkmale des Anspruchs 1 gelöst.

Beim erfindungsgemäßen Schließsystem besitzt der Transponder eine erhöhte Reichweite. Die Transponderspulen bei niederfrequenten Signalen und/oder die Antennen bei höherfrequenten Signalen für die KeylessGo-Funktionalität können im Fahrersitz integriert sein. In einfacher Weise kann dann die Identifikation des Schlüssels sowie dessen Positionsüberprüfung erfolgen, Der Schlüssel wird in unmittelbarer Nähe zur Transponderspule erkannt, so daß der Fahrer den Schlüssel am Körper oder in Körpernähe, d.h. in der Nähe zu den im Fahrersitz befindlichen Spulen und/oder Antennen, tragen kann. Des Weiteren ist eine Erweiterung auf ein einfaches KeylessEntry-System möglich, indem die Transponderspulen und/oder Antennen für die KeylessEntry-Funktionalität im Rahmen für die Seitenscheibe des Kraftfahrzeugs angeordnet sind. Vorteilhafterweise ist durch dieses Funktionsprinzip ein einfaches und kostengünstiges KeylessGo/Entry-System geschaffen. Weitere Ausgestaltungen der Erfindung sind Gegenstand der Unteransprüche.

Eine Möglichkeit der Vereinfachung ist durch Erhöhung der Reichweite des Transponders für die bisherige "Notfahrfunktion" gegeben. Dies kann beispielsweise durch einen speziellen Transponder-Schaltkreis erfolgen. Somit ist das bisherige elektronische Zündschloss mit zusätzlichem Keyless-Steuergerät, das das zweite Transponder-System enthält, überflüssig. Es reicht dann aus, wenn im Kraftfahrzeug ein elektrischer Schalter, insbesondere in der Art eines Start/Stop-Tasters angeordnet ist, derart daß die Bedienung des elektrischen Schalters durch den Benutzer den bestimmungsgemäßen Betrieb der Sender und/oder Empfänger für die KeylessGo-Funktionalität auslöst.

Die mit der Erfindung erzielten Vorteile bestehen insbesondere darin, daß mit lediglich einem statt wie bisher mit zwei Transpondern ein vereinfachtes KeylessGo/Entry-System realisiert ist. Insbesondere ist die Notfahrfunktion im Keyless-System enthalten. Umgekehrt kann mit Hilfe des Notfahr-Transponders gleichzeitig ein einfaches KeylessGo/Entry-System verwirklicht werden. Es wird dabei lediglich ein Transponder-System benötigt.

Die zweite Einrichtung, beispielsweise der elektronische Schlüssel, benötigt keine Batterie für dessen Betrieb, allenfalls für eine eventuell zusätzliche Funkfembedienung. Desweiteren können die bisherigen Keyless-Steuergeräte zur Erzeugung der Weck- und/oder Abgrenzungsfelder eingespart werden. Die Transponder-Basisstation kann in einem verdeckten Steuergerät verbaut werden. Im sichtbaren Bereich wird dann nur noch ein Start/Stop-Taster o. dgl. benötigt. Insgesamt ist somit ein einfaches sowie betriebssicheres Schließsystem realisiert, das trotz dieser Verbesserungen kostengünstig herzustellen ist.

Ein Ausführungsbeispiel der Erfindung mit verschiedenen Weiterbildungen und Ausgestaltungen ist in den Zeichnungen dargestellt und wird im folgenden näher beschrieben. Es zeigen.
- Fig. 1: ein mit einem Schließsystem ausgestattetes Kraftfahrzeug und
- Fig. 2: ein schematisches Blockschaltbild des Schließsystems mit einem Diagramm zur Übertragung der Signale.

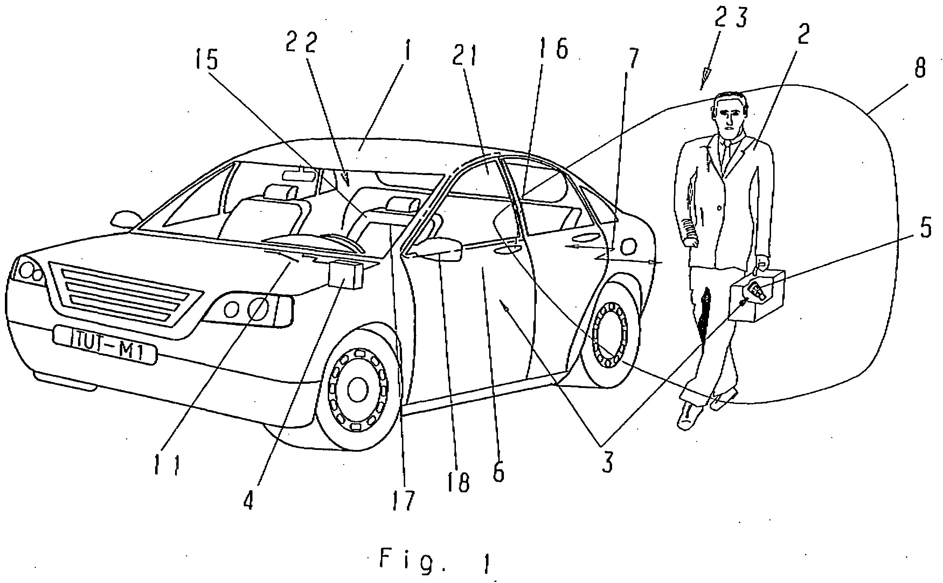

In Fig. 1 ist ein Kraftfahrzeug 1 mit dem berechtigten Benutzer 2 zu sehen. Das Kraftfahrzeug 1 ist für die Zugangsberechtigung mit einem Schließsystem 3 als Türschließsystem versehen, das eine als eine Steuereinrichtung ausgebildete erste Einrichtung 4 und eine zugehörige zweite Einrichtung 5 umfaßt. Die zweite Einrichtung 5 ist in der Art eines elektronischen Schlüssels, eines Identifikations(ID)-Gebers, einer Chipkarte, einer Smartcard o. dgl. ausgebildet. Die zweite Einrichtung 5 befindet sich im Besitz des berechtigten Benutzers 2, womit dieser innerhalb eines Wirkbereichs 8 Zugang zum Kraftfahrzeug 1 besitzt.

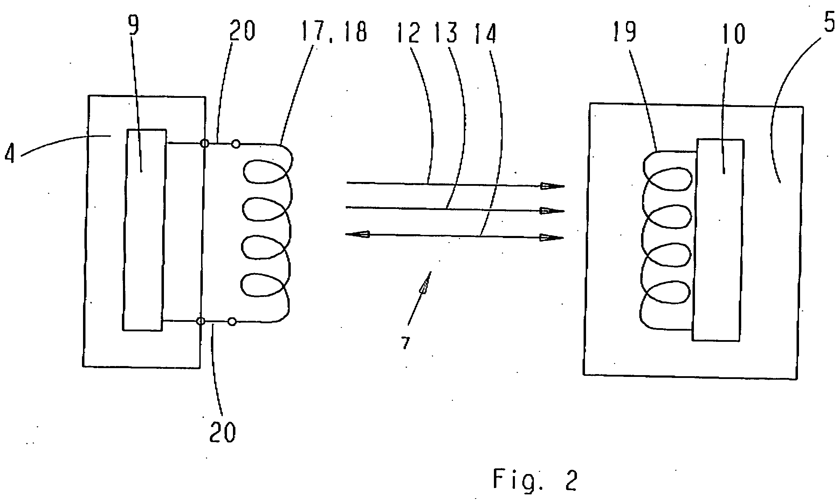

Die erste Einrichtung 4 besitzt wenigstens zwei Zustände, wobei im ersten Zustand eine Verriegelung und im zweiten Zustand eine Entriegelung der Autotüren 6 vorliegt. Die beiden Einrichtungen 4, 5 besitzen zu deren bestimmungsgemäßen Betrieb Mittel zum Senden und/oder Empfangen von Signalen 7 in der Art von Transpondern mittels einer insbesondere niederfrequenten elektromagnetischen Trägerwelle. Bei wenigstens einem dieser zwischen der zweiten Einrichtung 5 und der ersten Einrichtung 4 übertragenen Signale 7 handelt es sich um ein codiertes, elektromagnetisches Betriebssignal 14 (siehe Fig. 2). Das codierte Betriebssignal 14 dient zur Authentikation der zweiten Einrichtung 5, womit bei berechtigter zweiter Einrichtung 5 nach positiver Auswertung des übertragenen Betriebssignals 14 eine Änderung des Zustandes der ersten Einrichtung 4 bewirkbar ist Die Übertragung des codierten Betriebssignals 14 erfolgt dann, wenn der berechtigte Benutzer 2 den Türgriff 16 an der Autotüre 6 betätigt oder sich dem Türgriff 16 annähert. Dadurch wird die Entriegelung der Autotüren 6 entsprechend der KeylessEntry-Funktionalität ausgelöst. Ebensogut kann die Übertragung des codierten Betriebssignals 14 auch selbsttätig ohne Mitwirkung des Benutzers 2 erfolgen, sobald dieser den Wirkbereich 8 betritt, was jedoch im folgenden nicht näher betrachtet wird. Schließt der Benutzer 2 die Autotüren 6 von außen, so erfolgt eine selbsttätige Verriegelung der Autotüren 6. Ebensogut kann die selbsttätige Verriegelung der Autotüren 6 erfolgen, nachdem der Benutzer 2 den Wirkbereich 8 verlassen hat.

Das Schließsystem 3 stellt weiterhin die Fahrberechtigung für das Kraftfahrzeug 1 fest Hierzu bewirkt die als Steuereinrichtung ausgebildete erste Einrichtung 4 ebenfalls entsprechend den beiden Zuständen die Ent- und/oder Verriegelung des Zündschlosses oder der Lenkradverriegelung. Ebensogut kann ein sonstiges funktionsrelevantes Bauteil des Kraftfahrzeugs 1 durch die erste Einrichtung 4 dementsprechend angesteuert werden. Beispielsweise kann dadurch eine Freigabe und/oder Sperrung einer Wegfahrsperre, des Motorsteuergeräts o. dgl. erfolgen. Die Übertragung des codierten Betriebssignals 14 zur Authentikation der zweiten Einrichtung 5 erfolgt dann, wenn der berechtigte Benutzer 2 sich im Kraftfahrzeug 1 befindet und einen elektrischen Schalter in der Art eines Start/Stop-Schalters 11 betätigt. Dadurch wird der Start-Vorgang o. dgl. des Kraftfahrzeugs 1 entsprechend des bestimmungsgemäßen Betriebs der Mittel zum Senden und/oder Empfangen von Signalen 7 für die KeylessGo-Funktionalität ausgelöst.

Die Funktionsweise des erfindungsgemäßen Schließsystems 3 soll nun anhand der Fig. 2 näher erläutert werden. Zunächst sendet die erste Einrichtung 4 mittels eines Senders/Empfängers 9 als Mittel zum Senden und/oder Empfangen von Signalen ein als Wecksignal bezeichnetes erstes elektromagnetisches Signal 12 für die zugehörige zweite Einrichtung 5, die einen entsprechenden Sender/Empfänger 10 als Mittel zum Senden und/oder Empfangen von Signalen besitzt. Dadurch wird die zweite Einrichtung 5 aus einem Ruhezustand mit verringertem Energiebedarf in einen aktivierten Zustand für den bestimmungsgemäßen Betrieb übergeführt. Nachfolgend wird dann, wie bereits beschrieben, das dritte elektromagnetische Signal als codiertes elektromagnetisches Betriebssignal 14 zur Authcntikation mittels der Sender/Empfänger 9, 10 zwischen der ersten und der zweiten Einrichtung 4, 5 übertragen. Das Signal 14 kann insbesondere aus mehreren Teilsignalen bestehen und in einer bidirektionalen Kommunikation zwischen den beiden Einrichtungen 4, 5 übertragen werden. Im Hinblick auf nähere Einzelheiten zur bidirektionalen Kommunikation an sich wird auch auf die DE 43 40 260 A1 verwiesen.

Das Wecksignal 12 kann beispielsweise eine Kennung zum Kraftfahrzeug-Typ enthalten. Nach Empfang des Wecksignals 12 sind zunächst sämtliche im Wirkbereich 8 befindliche zweite Einrichtungen 5, die zum selben Kraftfahrzeug-Typ gehören, aktiviert. In einer weiteren Ausgestaltung des Schließsystems 3 sendet die erste Einrichtung 4 zwischen dem ersten Signal 12 und dem dritten Signal 14 ein zweites elektromagnetisches Signal 13 zur zweiten Einrichtung 5 als Selektionssignal, wie näher anhand von Fig. 2 zu erkennen ist. Das zweite Signal 13 enthält eine Information über die nähere Identität des Kraftfahrzeugs 1. Dadurch wird bewirkt, daß lediglich die tatsächlich zur ersten Einrichtung 4 zugehörigen zweiten Einrichtungen 5 im aktivierten Zustand verbleiben. Im aktivierten Zustand befindliche, nicht zum Kraftfahrzeug 1 zugehörige zweite Einrichtungen werden jedoch in den Ruhezustand zurückgeführt.

Es bietet sich an, die zur ersten Einrichtung 4 zugehörigen zweiten Einrichtungen 5 in gruppenartige Linien einzuteilen. Bevorzugterweise besitzt ein Kraftfahrzeug 1 zwei Linien, und zwar einen ersten elektronischen Schlüssel sowie Ersatzschlüssel als erste Linie und einen zweiten elektronischen Schlüssel sowie Ersatzschlüssel als zweite Linie. Zweckmäßigerweise weisen die Linien eine Rangfolge zur Durchführung der Authentikation auf, so daß bei Vorhandensein beider Linien im Wirkbereich 8 lediglich eine Authentikation mit der ranghöheren Linie, die entsprechend ausgewählt wird, durchzuführen ist. Das Selektionssignal 13 kann nun zusätzlich eine Information zu den der ersten Einrichtung 4 zugeordneten Linien enthalten, um dem Schließsystem 3 gegebenenfalls eine Auswahl für die Authentikation zu gestatten.

Der Transponder für den Sender/Empfänger 9,10 besitzt eine erhöhte Reichweite, und zwar derart daß der bestimmungsgemäße Betrieb der beiden Einrichtungen 4, 5 ermöglicht ist, wenn die beiden Einrichtungen 4,5 genügend nahe beieinander sind. Die Reichweite des Transponders ist dabei so ausgelegt, daß die zweite Einrichtung 5 in etwa in der Position und/oder in der unmittelbaren Nähe der Position befindlich sein muß, in der die jeweilige vom Schließsystem 3 bewirkbare Funktion des Kraftfahrzeugs 1 durch den Benutzer 2 bedienbar ist. Mit anderen Worten erstreckt sich für die KeylessGo-Funktion die Reichweite in die Nähe zum Fahrersitz 15 und für die KeylessEntry-Funktionalität in die Nähe zu den Autotüren 6, wie anhand von Fig. 1 zu erkennen ist, so daß der Benutzer 2 die zweite Einrichtung 5 lediglich am Körper oder in Körpernähe tragen muß. Andererseits kann aufgrund der begrenzten Reichweite des Transponders für die Sender/Empfänger 9, 10 das bisher notwendige Bereichsabgrenzungssignal entfallen, das zur Bestimmung des Standortes der zweiten Einrichtung 5 in Bezug auf die erste Einrichtung 4 dient, also ob die zweite Einrichtung 5 außerhalb am Kraftfahrzeug 1 sowie gegebenenfalls an welcher Stelle des Außenraums 23 und/oder im Innenraum 22 des Kraftfahrzeugs 1 befindlich ist. Dadurch ergibt sich zusätzlich zur Vereinfachung des Schließsystems 3 auch ein Zeitgewinn bei dessen Betrieb.

Die in Fig. 2 lediglich schematisch angedeuteten Transponderspulen 17,18 für den Sender/Empfänger 9 stehen über Leitungen 20 mit der ersten Einrichtung 4 für deren bestimmungsgemäßen Betrieb in Verbindung. Hingegen ist in der zweiten Einrichtung 5 die Transponderspule 19 in der zweiten Einrichtung 5 integriert. Wie anhand von Fig. 1 weiterhin zu erkennen ist, ist zweckmäßigerweise die der Identifikation der zweiten Einrichtung 5 sowie deren Positionsüberprüfung dienende Transponderspule17 für die KeylessGo-Funktionalität im Fahrersitz 16 angeordnet. Die Transponderspule 18 für die KeylessEntry-Funktionalität ist im Rahmen für die Seitenscheibe 21 an der Autotüre 6 des Kraftfahrzeugs 1 angeordnet.

Anstelle von Spulen 17,18,19, die mit den Transpondern der Sender/Empfänger 9,10 zusammenwirken, können auch Antennen verwendet werden. Dann ist ein Betrieb der Sender/Empfänger 9, 10 nicht nur mit niederfrequenten elektromagnetischen Trägerwellen sondern auch mit höheren Frequenzen ermöglicht. Dies kann Vorteile für die Übertragungsgeschwindigkeit zwischen den beiden Einrichtungen 4, 5 bringen.

Die Erfindung ist nicht auf das beschriebene und dargestellte Ausführungsbeispiel beschränkt. Die Erfindung umfaßt weiterhin auch alle fachmännischen Weiterbildungen im Rahmen der Schutzrechtsansprüche. So kann ein derartiges Schließsystem nicht nur im Kraftfahrzeug eingesetzt werden. Es ist auch eine Verwendung für ein sonstiges Türschloß, das sich beispielsweise an einer Immobilic o. dgl. befindet, möglich.

### Bezugszeichen-Liste:

- 1:: Kraftfahrzeug
- 2:: (berechtigter) Benutzer
- 3:: Schließsystem
- 4:: erste Einrichtung
- 5:: zweite Einrichtung
- 6:: Autotüre
- 7:: Signal
- 8:: Wirkbereich
- 9:: Sender/Empfänger (in der ersten Einrichtung)
- 10:: Sender/Empfänger (in der zweiten Einrichtung)
- 11:: Start/Stop-Schalter
- 12:: (erstes) Signal / Wecksignal
- 13:: (zweites) Signal / Selektionssignal
- 14:: (drittes) Signal / (codiertes) Betriebssignal
- 15:: Fahrersitz
- 16:: Türgriff
- 17:: Transponderspule (im Fahrersitz)
- 18:: Transponderspule (an der Seitenscheibe)
- 19:: Transponderspule (in der zweiten Einrichtung)
- 20:: Leitung
- 21:: Seitenscheibe
- 22:: Innenraum (vom Kraftfahrzeug)
- 23:: Außenraum (vom Kraftfahrzeug)

## Patentansprüche

1. Schließsystem, für die Zugangs- und/oder Fahrberechtigung bei einem Kraftfahrzeug (1) mit einer KeylessEntry/Go-Funktionalität, mit einer wenigstens zwei Zustände besitzenden, als Steuereinrichtung ausgebildeten ersten Einrichtung (4), wie einer Steuereinrichtung zur Ent- und/oder Verriegelung der Autotüren (6), des Zündschlosses, der Lenkradverriegelung, zur Freigabe und/oder Sperrung der Wegfahrsperre, oder des Motorsteuergeräts, und mit einer zugehörigen, als ein elektronischer Schlüssel, ein ID-Geber, oder eine Chipkarte ausgebildeten zweiten Einrichtung (5), wobei die beiden Einrichtungen (4, 5) zu deren bestimmungsgemäßen Betrieb Sender und/oder Empfänger (9, 10) in Form von Transpondern für niederfrequente elektromagnetische Signale (7) besitzen, wobei der Transponder eine erhöhte Reichweite besitzt, derart daß der bestimmungsgemäße Betrieb der beiden Einrichtungen (4, 5) ermöglicht ist, wenn die zweite Einrichtung (5) in etwa in der Position und/oder in der Nähe der Position befindlich ist, in der die jeweilige, vom Schließsystem (3) bewirkbare Funktion des Kraftfahrzeugs (1) durch den Benutzer (2) bedienbar ist, wobei wenigstens eine Transponderspule (17, 18) und/oder Antenne mit der ersten Einrichtung (4) für deren bestimmungsgemäßen Betrieb in Verbindung steht und wobei die Transponderspule (17) und/oder Antenne für die KeylessGo-Funktionalität im Fahrersitz (15) angeordnet ist, **dadurch gekennzeichnet, daß** eine Transponderspule (18) und/oder Antenne für eine KeylessEntry-Funktionalität im Rahmen für die Seitenscheibe (21) des Kraftfahrzeugs (1) derart angeordnet ist, daß sie die Seitenscheibe umgibt.

2. Schließsystem nach Anspruch 1, **dadurch gekennzeichnet, daß** im Kraftfahrzeug (1) ein elektrischer Schalter (11), insbesondere in der Art eines Start/Stop-Tasters angeordnet ist, derart daß die Bedienung des elektrischen Schalters (11) durch den Benutzer (2) den bestimmungsgemäßen Betrieb der Sender und/oder Empfänger (9, 10) für die KeylessGo-Funktionalität auslöst.

3. Schließsystem nach Anspruch 2, dass der elektrische Schalter (11) ein Start-/ StopSchalter ist.

## Claims

1. A locking system, for the access- and/or driving authorization in the case of a motor vehicle (1) with a keyless entry/go functionality, having a first device (4) possessing at least two states, which is designed as a control device, such as a control device for unlocking and/or locking the auto doors (6), the ignition lock, the steering wheel lock, for releasing and/or the blocking the immobilizer, or the engine control unit, and having an associated second device (5) designed as an electronic key, an ID transmitter or a chip card, wherein the two devices (4, 5) for their intended operation possess a transmitter and/or receiver (9, 10) in the form of transponders for low-frequency electromagnetic signals (7), wherein the transponder possesses an increased range, such that the intended operation of the two devices (4, 5) is made possible, if the second device (5) is located approximately in the positon and/or in the vicinity of the position, in which the respective function of the motor vehicle (1), which can be effected by the locking system (3), can be operated by the user (2), wherein at least one transponder coil (17, 18) and/or antenna is connected with the first device (4) for its intended operation and wherein the transponder coil (17) and/or antenna for the keyless go functionality is arranged in the driver's seat, **characterized in that** a transponder coil (18) and/or antenna for a keyless entry functionality is arranged in the frame for the side window (21) of the motor vehicle (1) in such a manner that it surrounds the side window.

2. A locking system according to Claim 1, **characterized in that** in the motor vehicle (1) an electrical switch, in particular, in the form of a start/stop button is arranged in such a manner that the operation of the electrical switch (11) by the user (2) triggers the intended operation of the transmitter and/or receiver (9, 10) for the keyless go functionality.

3. A locking system according to Claim 2 that the electrical switch (11) is a start-/stop-switch.

## Revendications

1. Système de fermeture, pour l'autorisation d'accès et/ou de démarrage d'un véhicule à moteur (1), avec une fonctionnalité « KeylessEntry/Go), avec un premier dispositif (4) présentant au moins deux états, conçue comme un dispositif de commande, comme un dispositif de commande pour le déverrouillage et/ou le verrouillage des portières (6), du démarreur, du verrouillage de volant, pour la libération et/ou le blocage du système anti-démarrage ou de l'appareil de commande du moteur, et avec un deuxième dispositif (5) correspondant, conçu comme une clé électronique, un capteur ID ou une carte à puce, les deux dispositifs (4, 5) comprenant, pour leur fonctionnement approprié, un émetteur et/ou un récepteur (9, 10) sous la forme de transpondeurs pour des signaux électromagnétiques à basse fréquence (7), le transpondeur présentant une portée importante, de façon à ce que le fonctionnement approprié des deux dispositifs (4, 5) soit possible lorsque le deuxième dispositif (5) se trouve approximativement à la position et/ou à proximité de la position dans laquelle la fonction correspondante, pouvant être actionnée par le système de fermeture (3), du véhicule à moteur (1) puisse être commandée par l'utilisateur (2), au moins une bobine de transpondeur (17, 18) et/ou une antenne étant reliée avec le premier dispositif (4) pour son fonctionnement approprié et la bobine de transpondeur (17) et/ou l'antenne pour la fonctionnalité KeylessGo est disposée dans le siège du conducteur (15), **caractérisé en ce qu'**une bobine de transpondeur (18) et/ou une antenne pour une fonctionnalité KeylessEntry est disposée dans le cadre pour la vitre latérale (21) du véhicule à moteur (1) de façon à ce qu'elle entoure la vitre latérale.

2. Système de fermeture selon la revendication 1, **caractérisé en ce que**, dans le véhicule à moteur (1), se trouve un interrupteur électrique (11), plus particulièrement sous la forme d'un bouton start/stop, de façon à ce que l'actionnement de l'interrupteur électrique (11) par l'utilisateur (2) déclenche le fonctionnement approprié des émetteurs et/ou des récepteurs (9, 10) pour la fonctionnalité KeylessGo.

3. Système de fermeture selon la revendication 2, **caractérisé en ce que** l'interrupteur électrique (11) est un interrupteur start/stop.
